# EUROPÄISCHE PATENTSCHRIFT

(11) **EP 1 409 589 B1**
(45) Veröffentlichungstag und Bekanntmachung des Hinweises auf die Patenterteilung: **03.11.2004**
(21) Anmeldenummer: 02759742.6
(22) Anmeldetag: 28.03.2002
(51) Int. Cl.: C08L 83/04, C08K 5/00, C08K 5/54

(54) **BINDEMITTEL AUF SILIKONHARZBASIS UND DEREN VERWENDUNG IN VERFAHREN ZUR HERSTELLUNG VON FORMTEILEN AUF DER BASIS VON MINERALFASERN**
SILICON RESIN-BASED BINDING AGENTS AND THEIR USE IN METHODS FOR PRODUCING MINERAL-FIBRE BASED SHAPED BODIES
LIANTS A BASE DE RESINE DE SILICONE ET LEUR UTILISATION DANS DES PROCEDES DE PRODUCTION DE PIECES MOULEES A BASE DE FIBRES MINERALES

(30) Priorität: 04.04.2001 DE 10116810
(43) Veröffentlichungstag der Anmeldung: 21.04.2004
(73) Patentinhaber: Wacker-Chemie GmbH, 81737 München (DE)
(72) Erfinder: RAUTSCHEK, Holger, 01612 Nünchritz (DE); DEUBZER, Bernward, 84489 Burghausen (DE); BEUSCHEL, Günter, 01612 Nünchritz (DE); HANEBURGER, Karin, 80796 München (DE)
(74) Vertreter: Budczinski, Angelika
(86) Internationale Anmeldenummer: PCT/EP2002/003576
(87) Internationale Veröffentlichungsnummer: WO 2002/081568

(56) Entgegenhaltungen:
- EP-A- 0 342 519
- EP-A- 0 366 133
- DE-A- 19 740 757

## Beschreibung

Die Erfindung betrifft Siloxansuspensionen und deren Verwendung als Bindemittel zur Herstellung von Formteilen auf der Basis von Mineralfasern sowie so hergestellte Fasergebilde.

Formteile aus Mineralfasern sind Verbundwerkstoffe aus Fasern und einem Bindemittel, das die Fasern miteinander verknüpft, so dass die gewünschte Form erhalten bleiben kann. Sie finden vielfältige Einsatzmöglichkeiten als Werkstoffe aber insbesondere als Dämmstoffe in Bauindustrie und Technik. Die Herstellung derartiger Produkte ist seit langem bekannt. Zur Herstellung dieser Produkte wird im allgemeinen sofort nach der Zerfaserung des Minerals aus der Schmelze heraus die Bindemittellösung aufgesprüht und das Produkt in nachfolgenden Schritten geformt und in einem Ofen ausgehärtet. Dieses Verfahren läuft meist vollkontinuierlich und damit ökonomisch ab. Als Bindemittel werden in diesem Prozess üblicherweise wässrige Lösungen von Phenol-Formaldehyd-Kondensaten verwendet, die mit Aminoharzen oder Harnstoff modifiziert sein können.

Obwohl diese mit Phenolharz gebundenen Mineralwolleprodukte eine weite Verbreitung, z.B. in der Bauindustrie zur Wärmedämmung und Trittschalldämmung, haben, weisen sie auch eine Reihe von Nachteilen auf, die bestimmte Anwendungen ausschließen. Der Hauptnachteil ist die geringe thermische Beständigkeit. Hinzu kommt, dass sowohl bei der Herstellung in größerem Umfang Emissionen von Formaldehyd und Phenolen entstehen, als auch bei der thermischen Belastung des fertigen Produktes Zersetzungsprodukte der eingesetzten organischen Harze frei werden, die eine Belästigung oder sogar eine gesundheitliche Gefährdung darstellen. Der Gehalt an organischem Bindemittel führt häufig auch zu einer gewissen Brennbarkeit oder Entflammbarkeit, so dass nicht alle Forderungen des Brandschutzes erfüllt werden können. Somit können mit organischen Harzen hergestellte Produkte im allgemeinen nicht unter Bedingungen eingesetzt werden, wo die Dämmstoffe nicht entflammbar sein dürfen oder wo sie einer thermischen Belastung unterliegen. Das ist z.B. beim Einsatz in Brandschutzeinrichtungen oder in Hausgeräten wie Küchenherden der Fall.

Zur Lösung dieses Problems ist vorgeschlagen worden, niedrig schmelzende thermoplastische Gläser z.B. auf Borat- oder Phosphatbasis als Bindemittel einzusetzen, wie z.B. in US-A 5,591,505 offenbart. Nachteilig bei diesem Bindemittel ist die Tatsache, dass das Bindemittel nicht vernetzt und somit das damit hergestellte Gebilde aus Mineralfasern bei thermischer Belastung seine mechanische Festigkeit oder sogar seine Form verliert.

Siliconharze sind als Bindemittel für hochtemperaturbeständige Produkte zum Beispiel Elektroisolierstoffe auf Glimmerbasis bekannt. Hierzu sei beispielsweise auf DE-A 11 26 467 verwiesen. In EP-A 342 519 ist auch vorgeschlagen worden, Siliconharzemulsionen anstelle der Phenolharzlösung als Bindemittel für die Herstellung von Gebilden auf der Basis von Mineralfasern zu verwenden. Damit wird jedoch die Problematik der Emissionen nur bedingt gelöst. Auf der einen Seite enthalten diese Siliconharzemulsionen organische Emulgatoren, die bei thermischer Belastung unter Bildung unerwünschter Gase zersetzt werden; auf der anderen Seite enthalten die vorgeschlagenen Emulsionen auch flüssige niedermolekulare Siloxane, wie etwa in EP-A 366 133 offenbart, die entweder selbst oder durch Abspaltung von Alkoxygruppen bei der Aushärtung zu Emissionen führen.

Auch bei der Herstellung von Formteilen aus Mineralfasern mit pulverförmigen Bindemitteln sind immer eine spezielle Vermischung von vorgefertigtem Fasergut und Bindemitteln sowie hohe Drücke bei der Verarbeitung notwendig. Hierzu sei beispielsweise auf DE-A 27 56 503, EP-A 403 347 und DE-A 43 92 078 verwiesen. Ein Einsatz von herkömmlichem pulverförmigen Bindemittel im Rahmen der üblichen oben erläuterten Herstellungstechnologie von Gebilden aus Mineralfasern ist im allgemeinen nicht möglich. Durch die Verwendung von Alkoxysilanen im Gemisch mit kolloidalen Partikeln z.B. Kieselsol, sogenannten Nanokompositen, kann man kontinuierlich Formteile aus Mineralfasern herstellen, die auch bei höheren Temperaturen beständig sind und ein verbessertes Brandverhalten zeigen. Dieses Verfahren hat allerdings den großen Nachteil, dass insbesondere bei der Herstellung der Mineralfaserprodukte die Alkoxygruppen der eingesetzten Silane größere Mengen Alkohol abspalten, da die eingesetzten Silanmischungen zu über 75 Masse% aus Alkoxygruppen bestehen. Diese Emissionen stellen sowohl ein Brandrisiko dar als auch eine Gefährdung von Gesundheit und Umwelt. Die deshalb notwendige Reinigung der entstehenden Abluft ist mit einem erheblichen Aufwand verbunden.

Gegenstand der Erfindung sind Organopolysiloxansuspensionen bestehend aus
(A) 100 Gewichtsteilen eines pulverförmigen Organopolysiloxanharzes aus Einheiten der allgemeinen Formel

   RₐSi(OR¹)_{b}(OH)_{c}O_{(4-a-b-c)/2} (I),

   wobei
   R gleich oder verschieden sein kann und einwertige, SiCgebundene, gegebenenfalls substituierte Kohlenwasserstoffreste bedeutet,
   R¹ gleich oder verschieden sein kann und einen Alkylrest bedeutet,
   a 0, 1, 2 oder 3 ist,
   b 0, 1, 2 oder 3 ist und
   c 0, 1, 2 oder 3 ist,
   mit der Maßgabe, dass die Summe aus a+b+c≤3 ist und das Organopolysiloxanharz aus Einheiten der allgemeinen Formel (I) mindestens einen Alkoxyrest und mindestens einen Hydroxyrest aufweist,
(B) 0,05 bis 5 Gewichtsteilen eines Kondensationskatalysators,
(C) 0 bis 4 Gewichtsteilen eines anorganischen Antiabsetzmittels,
(D) 0,01 bis 4 Gewichtsteilen eines Benetzungshilfsmittels,
(E) 100 bis 10000 Gewichtsteilen Wasser und
(F) 0 bis 10 Gewichtsteilen Zusatzstoffe, ausgewählt aus Haftvermittlern, Polyorganosiloxanen, ausgenommen solche aus Einheiten der Formel (I), Konservierungsmitteln, Farbstoffen und Duftstoffen.

Bevorzugt handelt es sich bei Rest R um einwertige, SiC-gebundene, gegebenenfalls mit Aminogruppen, Hydroxylgruppen, Carboxylgruppen, Epoxygruppen, Mercaptogruppen oder Halogenatomen substituierte Kohlenwasserstoffreste mit 1 bis 18 Kohlenstoffatomen, besonders bevorzugt um Kohlenwasserstoffreste mit 1 bis 6 Kohlenstoffatomen, insbesondere um den Methylrest.

Beispiele für Rest R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, oder der α- und der β-Phenylethylrest.

Bevorzugt handelt es sich bei Rest R¹ um Alkylreste mit 1 bis 4 Kohlenstoffatomen, besonders bevorzugt um den Methyl- oder den Ethylrest.

Beispiele für Reste R¹ sind die für R oben angegebenen Beispiele für Alkylreste.

Bevorzugt hat a durchschnittliche Werte von 0,8 bis 1,5, besonders bevorzugt von 0,9 bis 1,1, insbesondere von 0,98 bis 1,02.

Bevorzugt hat b durchschnittliche Werte von 0,01 bis 0,5, besonders bevorzugt von 0,01 bis 0,08, insbesondere von 0,02 bis 0,04.

Bevorzugt hat c durchschnittliche Werte von 0,01 bis 0,4, besonders bevorzugt von 0,01 bis 0,1, insbesondere von 0,02 bis 0,06.

Für die Verwendung der erfindungsgemäßen Suspensionen als Bindemittel ist es wesentlich, dass die pulverförmigen Organopolysiloxanharze (A) möglichst wenig Alkoxygruppen tragen, damit nur minimale Emissionen auftreten können. Auf der anderen Seite sind im Harz ausreichend Silanolgruppen erforderlich, um eine für einen kontinuierlichen Verarbeitungsprozess ausreichende Härtungsgeschwindigkeit und Haftung auf dem Fasergut zu erreichen.

Die Glasübergangstemperatur der erfindungsgemäß eingesetzten Organopolysiloxanharze (A) liegt im Bereich von bevorzugt 30 bis 120°C, besonders bevorzugt im Bereich von 30 bis 80°C, insbesondere im Bereich von 40 bis 65°C. Bei niedrigeren Glasübergangstemperaturen besteht die Gefahr, dass die Harzpartikel bereits in der Suspension verkleben und so bei den Anwendungen zu technischen Störungen führen können. Bei höheren Glasübergangstemperaturen ist bei der Verwendung als Bindemittel die Benetzung der z.B. Glasfaseroberflächen im Härteofen nicht immer ausreichend, um den gewünschten Verbund zwischen den Glasfasern zu erhalten. Hinsichtlich der Definition der Glasübergangstemperatur, die z.B. durch DSC-Messungen bestimmt wird, sei insbesondere auf Römpp Chemielexikon, 9. Auflage, G.Thieme Verlag Stuttgart, New York, 1990, S. 1587 verwiesen.

Die erfindungsgemäß eingesetzten Organopolysiloxanharze (A) haben eine gewichtsmittlere Molmasse M_{w} von bevorzugt 2000 bis 50 000 g/mol (GPC bezogen auf Polystyrol).

Die erfindungsgemäß eingesetzten Organopolysiloxanharze (A) sind handelsübliche Produkte bzw. können nach bekannten Verfahren hergestellt werden, beispielsweise mit den Ausgangsstoffen Alkyltrialkoxysilane, Alkyltrihalogensilane, Dialkyldialkoxysilane und/oder Dialkyldihalogensilane bzw. partielle Hydrolysate/Kondensate dieser Verbindungen. Vorteilhafterweise beträgt der molare Anteil von Monoalkylsilanen bei einer solchen Siliconharzsynthese mehr als 80 mol%.

Die erfindungsgemäß eingesetzten Organopolysiloxanharze (A) sind bei Raumtemperatur fest und können nach bekannten Verfahren zu einem Pulver vermahlen werden. Die Teilchengröße (Mittelwert der Volumenverteilung) liegt vorzugsweise im Bereich von 10 bis 50 µm, besonders bevorzugt im Bereich von 20 bis 40 µm.

Bevorzugt handelt es sich bei erfindungsgemäß eingesetztem Harz (A) um ein Siliconharz der Formel

Me_{a"}Si(OEt)_{b"}(OH)_{c"}O_{(4-a"-b"-c")/2} (II)''

mit Me gleich Methylrest und Et gleich Ethylrest, wobei a" durchschnittlich Werte zwischen 0,9 und 1,1, b" durchschnittlich Werte zwischen 0,01 und 0,08 und c" Werte von durchschnittlich 0,01 und 0,1 annehmen, das Siliconharz eine Glasübergangstemperatur von 30 bis 80°C hat und eine mittlere Molmasse (bezogen auf Polystyrol) von 2000 bis 50000 g/mol. Diese Siliconharze sind z.B. durch Hydrolyse und Kondensation von Methyltriethoxysilan zugänglich.

Beispiele für erfindungsgemäß eingesetzte Harze (A) sind
[CH₃SiO_{3/2}]₃₂[CH₃Si(OH)O_{2/2}]₃[CH₃Si(OC₂H₅)O_{2/2}]₂[(CH₃)₂SiO_{2/2}]₄;
[C₆H₅SiO_{3/2}]₄₀[CH₃SiO_{3/2}]₃₅[CH₃Si(OH)O_{2/2}]₂[CH₃Si(OC₂H₅)O_{2/2}]₃-[C₆H₅Si(OH)O_{2/2}]₂[C₆H₅Si(OC₂H₅)O_{2/2}]₂;
[CH₃SiO_{3/2}]₂₁₀[CH₃Si(OH)O_{2/2}]₅[CH₃Si(OC₂H₅)O_{2/2}]₃[(CH₃)₂SiO_{2/2}]₅; [CH₃SiO_{3/2}]₈₉[CH₃Si(OH)O_{2/2}]₅[CH₃Si(OCH₃)O_{2/2}]₄[SiO_{4/2}]₄-[HOSiO_{3/2}]₁[CH₃OSiO_{3/2}]₂;
[CH₃SiO_{3/2}]₆₀[CH₃Si(OH)O_{2/2}]₅[CH₃Si(OCH₃)O_{2/2}]₄[SiO_{4/2}]₄-[CH₃OSiO_{3/2}]₂[(CH₃)₂SiO_{2/2}]₁₀[(CH₃)₂(CH₃O)SiO_{1/2}]₂-[(CH₃)₂(CH₂=CH)SiO_{1/2}]₄;
[C₂H₅SiO_{3/2}]₂₀₀[C₂H₅Si(OH)O_{2/2}]₁₀[C₂H₅Si(OC₂H₅)O_{2/2}]₃; [CH₃SiO_{3/2}]₅₀₀[CH₃Si(OH)O_{2/2}]₁₂[CH₃Si(OC₂H₅)O_{2/2}]₈[(CH₃)₂SiO_{2/2}]₁₀-[(CH₃)₂(C₂H₅O)SiO_{1/2}]₄ und
[CH₃SiO_{3/2}]₃₂₀[CH₃Si(OH)O_{2/2}]₁₅[CH₃Si(OC₂H₅)O_{2/2}]₄-[(CH₃)(H₂NC₃H₆)SiO_{2/2}]₄.

Als Kondensationskatalysatoren (B) können alle bisher bekannten Härtungskatalysatoren verwendet werden. Metallorganische Verbindungen und aminische Katalysatoren sind einsetzbar, jedoch aus toxikologischen und ökologischen Gründen nicht bevorzugt.

Bevorzugt werden als Katalysator (B) Siliconate und/oder Silanolate, besonders bevorzugt solche aus 1-100 Einheiten der Formel

R⁴ _{g}(R⁵O)ₕ(M⁺O⁻)ᵢSiO_{(4-g-h-i)/2} (II)

eingesetzt, wobei
R⁴ gleich oder verschieden sein kann und eine für R angegebene Bedeutung hat,
R⁵ gleich oder verschieden sein kann und eine für R¹ angegebene Bedeutung hat,
M⁺ gleich oder verschieden sein kann und Alkalimetallion oder Ammoniumion bedeutet, insbesondere Na⁺ oder K⁺,
g gleich 0, 1, 2 oder 3, bevorzugt 1, ist,
h gleich 0, 1, 2 oder 3, bevorzugt 0, ist und
i gleich 0, 1, 2 oder 3, bevorzugt 1 oder 2, ist, mit der Maßgabe, dass die Summe aus g, h und i kleiner oder gleich 4 ist und pro Molekül mindestens ein Rest (M⁺O⁻) anwesend ist.

Beispiele, bevorzugte und besonders bevorzugte Bereiche für Rest R⁴ sind die gleichen wie für Rest R angegeben.

Beispiele, bevorzugte und besonders bevorzugte Bereiche für Rest R⁵ sind die gleichen wie für Rest R¹ angegeben.

Bevorzugt weisen die erfindungsgemäß eingesetzten Siliconate bzw. Silanolate 1-10 Einheiten der Formel (II) auf.

Beispiele für Verbindungen aus Einheiten der Formel (II) sind CH₃Si(O⁻K⁺)₂(OCH₃); CH₃Si(O⁻K⁺)₃; C₆H₅Si(O⁻Na⁺)₃; C₂H₅Si(O⁻NH₄⁺)₃ sowie deren Kondensationsprodukte wie [CH₃Si(O⁻Na⁺)₂O_{1/2}]₂[CH₃Si(O⁻Na⁺)O_{2/2}]₅; [CH₃SiO_{3/2}]₆[CH₃Si(O⁻K⁺)₂O_{1/2}]₂[CH₃Si(O⁻K⁺)O_{2/2}]₂₀ -[CH₃Si(O⁻K⁺)(OC₂H₅)O_{1/2}]₂[CH₃Si(OC₂H₅)O_{2/2}];

Besonders bevorzugt handelt es sich bei den erfindungsgemäß eingesetzten Katalysatoren (B) um Natrium- oder Kaliumalkylsiliconate und/oder -silanolate, insbesondere um Natrium- oder Kaliummethylsiliconate und/oder -silanolate.

Vorteilhafterweise werden die Katalysatoren (B) in Form wäßriger Lösungen eingesetzt, insbesondere als 10-60%ige wäßrige Lösungen von Natrium- oder Kaliummethylsiliconaten und/oder -silanolaten.

Die erfindungsgemäß eingesetzten Katalysatoren (B) sind handelsübliche Produkte bzw. nach in der Silicium-Chemie gängigen Methoden herstellbar, z.B. im Fall der Siliconate bzw. Silanolate durch Auflösen der entsprechenden Alkylkieselsäuren oder durch Verseifen der entsprechenden Kieselsäurester in konzentrierten Laugen.

Die erfindungsgemäßen Suspensionen enthalten Härtungskatalysatoren (B) in Mengen von bevorzugt 0,5 bis 3 Gewichtsteilen je eingesetzte 100 Gewichtsteile Siliconharz (A).

Als erfindungsgemäß einsetzbares Antiabsetzmittel (C) können alle bisher bekannten anorganischen Antiabsetzmittel bzw. Verdickungsmittel verwendet werden. Es können z.B. als Komponente (C) der erfindungsgemäßen Suspensionen synthetische amorphe Kieselsäuren oder auch (ggf. modifizierte) Schichtsilicate, wie Smektite, Hectorite, Montmorillonite und Bentonite, eingesetzt werden.

Bevorzugt handelt es sich bei dem gegebenenfalls eingesetzten Antiabsetzmittel (C) um natürlich vorkommenden Schichtsilicate die z.B. durch Säuren oder Basen aktiviert und damit quellfähig gemacht wurden. Derartige Produkte sind bereits bekannt. Sie haben beispielsweise spezifische Dichten von 1,5 bis 4 g/cm³, Schüttgewichte von 300-1000 g/l, eine mittlere Teilchengröße von 1-30 µm und einen Restfeuchtegehalt von 5-15%. Die Dispersion derartiger thixotroper Schichtsilicate weist vorzugsweise einen pH Wert größer 8 auf. Derartige Produkte sind z.B. unter den Handelsnamen Bentone® von der Firma Rheox oder Optigel® von der Firma Süd-Chemie AG, Deutschland erhältlich.

Die erfindungsgemäßen Suspensionen enthalten anorganisches Antiabsetzmittel (C) in Mengen von bevorzugt 0,5 bis 2 Gewichtsteilen je 100 Teile eingesetztes Siliconharz (A).

Beispiele für die erfindungsgemäß eingesetzten Benetzungshilfsmittel (D) sind anionische, kationische und nichtionische Tenside, wobei wasserlösliche nichtionische Tenside, wie z.B. ethoxylierte Isotridecylalkohole, ethoxylierte Fettalkohole, und ethoxylierte natürliche Fette bevorzugt sind, sowie Tenside mit Ethylenoxid- und Propylenoxideinheiten, wie etwa Polyether-Polysiloxane.

Besonders bevorzugt handelt es sich bei den erfindungsgemäß eingesetzten Benetzungshilfsmittel (D) um Polyether-Polysiloxane aus Einheiten der allgemeinen Formel

(R²O)_{d}SiGₑR⁶ _{f}O_{(4-d-e-f)/2} (III),

wobei
R⁶ gleich oder verschieden sein kann und eine für R angegebene Bedeutung hat,
R² gleich oder verschieden sein kann und eine für R¹ angegebene Bedeutung hat oder Wasserstoff ist,
G gleich oder verschieden sein kann und einen Rest der Formel

-(CH₂)ₓ(OC_{y}H_{2y})_{z}OR³ (IV)

bedeutet, wobei R³ ein Wasserstoffatom, Alkyl- oder Acylrest mit 1-4 Kohlenstoffatomen ist,
x eine Zahl von 2 bis 10 ist,
y 2, 3 oder 4 sein kann und
z einen Wert von 1 bis 100 hat,
d 0, 1, 2 oder 3, bevorzugt durchschnittlich 0 bis 0,5, ist,
e 0, 1, 2 oder 3, bevorzugt durchschnittlich 0,05 bis 0,5, ist und
f 0, 1, 2 oder 3, bevorzugt durchschnittlich 1,5 bis 2,0, ist,
mit der Maßgabe, dass die Summe d+e+f kleiner oder gleich 3 ist und das Siloxan aus Einheiten der Formel (III) mindestens einen Rest G aufweist.

In den erfindungsgemäß eingesetzten Polyether-Polysiloxanen aus Einheiten der allgemeinen Formel (III) hat die Summe d+e+f einen durchschnittlichen Wert von bevorzugt 1,8 bis 2,2.

Beispiele, bevorzugte und besonders bevorzugte Bereiche für Rest R⁶ sind die gleichen wie für Rest R angegeben.

Beispiele, bevorzugte und besonders bevorzugte Bereiche für Rest R² sind die gleichen wie für Rest R¹ angegeben.

Beispiele für Rest G sind -(CH₂)₃(OC₂H₄)₁₀OH, -(CH₂)₆(OC₃H₆)₁₀OC(O)CH₃, -(CH₂)₃(OC₂H₄)₂₀(OC₃H₆)₂₀OC₄H₉, -(CH₂)₃(OC₄H₈)₇OCH₃, -(CH₂)₃(OC₂H₄)₃₀OH, -(CH₂)₃(OC₂H₄)₁₀OH, -(CH₂)₃O(C₂H₄O)₁₆-(C₃H₆O)₁₃-C₄H₉ , -(CH₂)₃(OC₂H₄)₁₀OH und -(CH₂)₃O(C₂H₄O)₁₆-(C₃H₆O)₁₃-C₄H₉.

Bevorzugt handelt es sich bei den erfindungsgemäß eingesetzten Polyether-Polysiloxane aus Einheiten der Formel (III) um [(CH₃)₃SiO_{1/2}]₂[(CH₃)₂SiO]₍₀₋₃₀₀₎[(CH₃)(G)SiO]₍₁₋₁₀₀₎ oder [(CH₃)₂(G)SiO_{1/2}]₂[(CH₃)₂SiO]₍₀₋₃₀₀₎[(CH₃)(G)SiO]₍₀₋₁₀₀₎, wobei G beispielsweise einem der oben angegeben Polyetherreste wie -(CH₂)₃O(C₂H₄O)₁₆-(C₃H₆O)₁₃-C₄H₉ entspricht.

Beispiele für die erfindungsgemäß eingesetzten Polyether-Polysiloxane aus Einheiten der Formel (III) sind
[(CH₃)₃SiO_{1/2}]₂[(CH₃)₂SiO]₄₀[(CH₃)(G)SiO]₇;
[(CH₃)₃SiO_{1/2}]₂[(CH₃)₂SiO]₇₀₀[(CH₃)(G)SiO]₇;
[(CH₃)₃SiO_{1/2}]₂[(CH₃)₂SiO]₈[(CH₃)(G)SiO]₄ und
[(CH₃)₂(G)SiO_{1/2}]₂[(CH₃)₂SiO]₈₀[(CH₃)(G)SiO]₈₀,
wobei G z.B. die Bedeutung von -(CH₂)₃O(C₂H₄O)₁₆-(C₃H₆O)₁₃-C₄H₉ haben kann. Des weiteren können aber auch Polyether-Polysiloxane eingesetzt werden, bei denen das Polysiloxangerüst eine verzweigte Struktur aufweist.

Die erfindungsgemäß als Komponente (D) eingesetzten Polyether-Polysiloxane können z.B. herstellungsbedingt auch noch Polyether enthalten, der nicht Polysiloxan gebunden ist.

Die erfindungsgemäß eingesetzten Benetzungsmittel (D) aus Einheiten der Formel (III) sind handelsübliche Produkte bzw. nach in der Silicium-Chemie gängigen Methoden herstellbar.

Die erfindungsgemäßen Suspensionen enthalten Benetzungsmittel (D) in Mengen von bevorzugt 0,1 bis 2 Gewichtsteilen je eingesetzte 100 Gewichtsteile Siliconharz (A). Mit diesen Mengen an Komponente (D) wird vorteilhafterweise eine sehr gute Verteilung des Siliconharzpulvers (A) in der erfindungsgemäßen Suspension ermöglicht.

Bevorzugt enthalten die erfindungsgemäßen Suspensionen Wasser in Mengen von 100 bis 2000 Gewichtsteilen, besonders bevorzugt von 200 bis 1000 Gewichtsteilen, jeweils bezogen auf 100 Gewichtsteile Siliconharz (A).

In den erfindungsgemäßen Suspensionen sind Zusatzstoffe (F) bevorzugt nicht enthalten.

Falls die erfindungsgemäßen Suspensionen Zusatzstoffe (F) enthalten handelt es sich um Mengen von bevorzugt 0,01 bis 10 Gewichtsteilen, besonders bevorzugt von 0,1 bis 1 Gewichtsteilen, jeweils bezogen auf 100 Gewichtsteile Siliconharz (A).

Beispiele für gegebenenfalls eingesetzte Zusatzstoffe (F) sind Haftvermittler, wie Tetraethoxysilan, Octyltriethoxysilan, Aminopropylaminoethyltriethoxysilan, Glycidoxypropyltrimethoxysilan und deren Hydrolyse/Kondensationsprodukte; Konservierungsmittel, wie Phenole und Kresole, Parabene, Formaldehyde, Formaldehyddepotstoffe, quartärnäre Ammoniumverbindungen, 2-Brom-2-nitropropan-1,3-diol; Farbstoffe, wie Kristallviolett, Rhodaminfarbstoffe, Azofarbstoffe; Duftstoffe sowie Polyorganosiloxane die nicht der Formel (I) entsprechen, wie Polydimethylsiloxane und Siliconharze, die keine Alkoxy oder Hydroxygruppen tragen.

Die Herstellung der erfindungsgemäßen Organopolysiloxansuspension kann nach allgemein bekannten Verfahren, wie etwa durch einfaches Zusammengeben der Komponenten erfolgen. Vorteilhafterweise wird der Katalysator (B) als letztes zugegeben. Zudem kann die Einbringung des Netzmittels (D) auch dadurch erfolgen, dass das Netzmittel auf dem Antiabsetzmittel (C), falls dieses eingesetzt wird und es sich bei diesem um einen festen anorganische Träger handelt, aufgebracht und mit diesem dosiert werden.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Organopolysiloxansuspensionen weisen vorzugsweise ein thixotropes Verhalten auf, d.h. die Viskosität in Ruhe ist deutlich höher, als die Viskosität bei höherem Schergefälle. Vorzugsweise liegt die dynamische Viskosität der erfindungsgemäßen Suspension bei 25°C und einem Schergefälle von 10/s im Bereich von 50 bis 2000 mPas, insbesondere im Bereich von 100 bis 500 mPas.

Die erfindungsgemäßen Suspensionen sind bevorzugt frei von stickstoffhaltigen Verbindungen.

Die erfindungsgemäßen Suspensionen haben den Vorteil, dass sie nach einfachen Verfahren herstellbar sind eine hohe Lagerstabilität besitzen.

Die erfindungsgemäßen Suspensionen haben des weiteren den Vorteil, dass sie leicht nach vielfältigen Verfahren wie Tauchen, Sprühen, Auftragen mittels Rakel und so weiter verarbeitbar sind und deshalb besonders leicht an unterschiedliche Prozesse angepasst werden können.

Die erfindungsgemäßen Suspensionen haben den Vorteil, dass sie bei der Verarbeitung schnell aushärten ohne nennenswerte Mengen an flüchtigen organischen Verbindungen zu emittieren. Deshalb sind diese Bindemittel besonders umweltfreundlich.

Die erfindungsgemäßen Suspensionen können für alle Zwecke eingesetzt werden, für die auch bisher Suspensionen von Organopolysiloxanen eingesetzt wurden. Insbesondere eignen sie sich als Bindemittel in Verfahren zur Herstellung von Formteilen aus Mineralfasern. Aber auch andere Substrate können mit den erfindungsgemäßen Bindemittelsuspensionen zu Verbundwerkstoffen verarbeitet werden. Beispiele für derartige Substrate sind Zellstoff, Papier, Baumwolle, Viskosefasern, Polyamidfasern, Acrylnitrilfasern, Wolle, Holzmehl, Steinmehl, Holzwolle und Holzspäne.

Bei der Herstellung von Formteilen aus Mineralfasern kann es sich um beliebige Verfahren des Standes der Technik handeln, wobei als Bindemittel anstelle der bisher üblichen die erfindungsgemäßen Suspensionen eingesetzt werden.

Ein weiterer Gegenstand der Erfindung ist ein Verfahren zur Herstellung von Formteilen auf der Basis von anorganischen Fasern durch Zufügen von Bindemittel zum Fasergut, Verformung des Faserguts und Härtung, dadurch gekennzeichnet, dass als Bindemittel die erfindungsgemäßen Organopolysiloxansuspensionen gegebenenfalls im Gemisch mit weiteren Komponenten eingesetzt werden.

Das Zufügen der Bindemittelsuspension zum Fasergut kann bei dem erfindungsgemäßen Verfahren nach bisher bekannten Methoden, wie z.B. Tränken oder Tauchen von ungebundenen Mineralfasern oder durch Aufsprühen, erfolgen.

Prinzipiell ist es auch möglich, wenn auch nicht bevorzugt, dass bei dem erfindungsgemäßen Verfahren auch Mischungen der oben beschriebenen Bindemittelsupensionen mit Siliconölemulsionen, Siliconharzemulsionen und/oder Nanokompositen verwendet werden.

In einer bevorzugten Ausführungsform des erfindungsgemäßen Verfahrens wird die erfindungsgemäße Organopolysiloxansuspension auf das Fasergut nach Verlassen des Schmelzofens aufgesprüht, das so behandelte Fasergut getrocknet, verformt und anschließend das Organopolysiloxanharz ausgehärtet.

Bei dem erfindungsgemäßen Verfahren wird die erfindungsgemäße Organopolysiloxansuspension auf das Fasergut bevorzugt kontinuierlich aufgesprüht, wobei dies mit bekannten Dosiersystemen in üblichen Fließband-Anlagen erfolgen kann.

Bei dem erfindungsgemäßen Verfahren wird die erfindungsgemäße Organopolysiloxansuspension auf das Fasergut bevorzugt in einer solchen Menge versetzt, dass der Silikonharzgehalt des versetzten Faserguts 0,1 bis 20 Gewichts-%, besonders bevorzugt 1 bis 10 Gewichts-%, jeweils bezogen auf das Gesamtgewicht der anorganischen Fasern, beträgt.

Bei dem erfindungsgemäßen Verfahren wird der Trocknungsschritt bei Temperaturen von bevorzugt 100 bis 500°C, besonders bevorzugt 150 bis 350°C, und vorzugsweise einem Druck der umgebenden Atmosphäre, d.h. etwa zwischen 900 und 1100 hPa, durchgeführt. Der Wasserentzug durch den Trocknungsschritt wird bevorzugt dann beendet, wenn der Wassergehalt des behandelten Faserguts kleiner 1%, besonders bevorzugt kleiner 0,1%, bezogen auf das Gesamtgewicht der behandelten anorganischen Fasern, ist.

Bei dem erfindungsgemäßen Verfahren handelt es sich bei der Verformung des behandelten Faserguts bevorzugt um eine Verdichtung auf die gewünschte Dichte.

Bei dem erfindungsgemäßen Verfahren erfolgt die Aushärtung des Organopolysiloxanharzes bevorzugt bei einer Temperatur von 100 bis 500°C, besonders bevorzugt bei 150 bis 350°C, und bevorzugt einem Druck der umgebenden Atmosphäre, also etwa 900 bis 1100 hPa, z.B. durch Durchblasen von heißer Luft. Dabei kann die Aushärtung des Siliconharzes simultan mit der Trocknung und Formgebung erfolgen. Es ist aber auch möglich, dass die Trocknung und die Aushärtung als zwei separate Verfahrensschritte durchgeführt werden.

Als Mineralfasern zur Herstellung der erfindungsgemäßen Formteile können alle Mineralfasern eingesetzt werden, die auch bisher zur Herstellung von Fasergebilden verwendet wurden, wie etwa Fasern, die aus silikatischen Schmelzen gewonnen werden.

Beispiele für anorganische Fasern, welche bei dem erfindungsgemäßen Verfahren eingesetzt werden können sind Glaswolle, Basaltwolle, Steinwolle und Schlackenwolle.

Die weite Variationsbreite der Roh- und Zusatzstoffe sowie die unterschiedlichen Faserherstellung aus der Schmelze machen Fasermaterialien mit sehr unterschiedlichen Eigenschaftsprofilen zugänglich.

In einer besonders bevorzugten Ausführungsform des erfindungsgemäßen Verfahrens wird die erfindungsgemäße Organopolysiloxansuspension auf die den Schmelzofen verlassenden, noch heißen Mineralfasern kontinuierlich aufgesprüht, das so behandelte Fasergut getrocknet, auf die gewünschte Dichte gebracht und das Siliconharz durch Erwärmen, bevorzugt durch das Durchleiten von Gasen mit einer Temperatur von 150 bis 350°C bei einem Druck der umgebenden Atmosphäre, also etwa 900 bis 1100 hPa, aushärten gelassen.

Das erfindungsgemäße Verfahren hat den Vorteil, dass die erfindungsgemäßen Formteile auf einfache Weise analog den im Stand der Technik beschriebenen Verfahren hergestellt werden können.

Das erfindungsgemäße Verfahren hat des weiteren den Vorteil, dass während des Prozesses keine unerwünschten Emissionen entstehen.

Das erfindungsgemäße Verfahren hat den Vorteil, dass eine sofortige gleichmäßige Benetzung der zu behandelnden anorganischen Fasern mit der erfindungsgemäßen Bindemittelsuspension erzielt wird und sich damit eine optimale Bindemittelwirkung entfalten kann.

Das erfindungsgemäße Verfahren hat den Vorteil, dass damit auf einfache und effiziente Weise thermisch beständige Formkörper aus Mineralfasern zugänglich sind, ohne dass bei der Herstellung nennenswerte Mengen flüchtiger organischer Verbindungen entstehen können.

Ein weiterer Gegenstand der vorliegenden Erfindung sind Formteile hergestellt aus Mineralfasern und Bindemitteln, dadurch gekennzeichnet, dass als Bindemittel die erfindungsgemäßen Organopolysiloxansuspensionen eingesetzt werden.

Die erfindungsgemäßen Formteile weisen eine Dichte von bevorzugt 5 bis 300 kg/m³, insbesondere 10 bis 80 kg/m³ auf.

In den erfindungsgemäßen Formteilen sind die anorganischen Fasern überwiegend punktförmig an Kreuzungspunkten der Fasern verknüpft, was eine wesentliche Voraussetzung für gute mechanische Eigenschaften, z.B. ein Rückstellvermögen, ist.

Durch die Verwendung des hydrophoben Siliconharzpulvers im Bindemittel haben die erfindungsgemäßen Formteile darüber hinaus eine besonders gute Wasserabweisung und Wasserbeständigkeit.

Die erfindungsgemäßen Formteile haben den Vorteil, dass sie thermisch außerordentlich stabil sind und bei thermischer Belastung keine Emissionen oder Verfärbungen zeigen.

Des weiteren haben die erfindungsgemäßen Formteile den Vorteil, dass sie gegenüber chemischen oder mikrobiologischen Einflüssen beständig sind.

Die erfindungsgemäßen bzw. erfindungsgemäß hergestellten Formteile auf der Basis von Mineralfasern können insbesondere überall dort eingesetzt werden, wo eine höhere thermische Beständigkeit erforderlich ist. Insbesondere eignen sie sich für die Wärme- und Schalldämmung in Gebäuden mit besonderen Anforderungen an den Brandschutz, als Isoliermaterialien für elektrische Haushaltgeräte, Kraftfahrzeuge oder Rohrleitungen.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

In den Beispielen werden die Organopolysiloxanharze **H1, H2** und **H3** der Formel

Me_{a'}Si(OEt)_{b'}(OH)_{c'}O_{(4-a'-b'-c')/2} (I)'

verwendet mit Me gleich Methyl- und Et gleich Ethylrest und den in Tabelle 1 angegebenen Daten:

**Tabelle 1:**

| Harz | a' | b' | c' | Glasübergangstemperatur Tg [°C] | mittlere Molmasse Mw [g/mol] | Gehalt an Ethoxygruppen in Masse-% |
|---|---|---|---|---|---|---|
| H1 | 1,01 | 0,043 | 0,040 | 45 | 10710 | 2,80% |
| H2 | 1,02 | 0,020 | 0,061 | 62 | 5900 | 1,35% |
| H3 | 1,0 | 0,032 | 0,018 | 52 | 9100 | 2,18% |

In den nachfolgenden Beispielen wurden als Benetzungshilfsmittel **(Netzmittel)** ein Silicontensid der Formel, [(CH₃)₃SiO_{1/2}]₂[(CH₃)₂SiO]₄₀[(CH₃)(G) SiO]₇ wobei G einem Rest -(CH₂)₃O(C₂H₄O)₁₆-(C₃H₆O)₁₃-C₄H₉ entspricht, mit einer Viskosität von 800 mPas, einem Trübungspunkt von 30°C (bestimmt an einer 10%igen Lösung in vollentsalztem Wasser) und einem Polyetheranteil (Polyethylenglycol/polypropylenglycol) von 80% eingesetzt.

### Beispiel 1 (Suspension S1)

100 Teile Siliconharz H1 vermahlen zu einem Pulver mit einem mittleren Teilchendurchmesser von 33 µm, 1 Teil Netzmittel, 2 Teile Antiabsetzmittel auf Hectoritebasis (käuflich erhältlich unter der Bezeichnung "Bentone® EW" bei der Fa. Rheox) und 1000 Teile Wasser werden 20 Minuten gerührt und anschließend 2 Teile einer 40%igen Kaliummethylsiliconatlösung (käuflich erhältlich unter der Bezeichung "Wacker BS® 15" bei der Wacker Chemie GmbH, Deutschland) zugegeben. Die Viskosität der so erhaltenen Suspension bei einem Schergefälle 10/s betrug 50 mPas.

### Beispiel 2 (Suspension S2)

100 Teile Siliconharz H2 vermahlen zu einem Pulver mit einem mittleren Teilchendurchmesser von 35 µm, 1 Teil Netzmittel, 2 Teile des in Beispiel 1 beschriebenen Antiabsetzmittels und 300 Teile Wasser werden 20 Minuten gerührt und anschließend 2 Teile der in Beispiel 1 beschriebenen 40%igen Kaliummethylsiliconatlösung zugegeben. Die Viskosität der Suspension bei einem Schergefälle 10/s betrug 260 mPas.

### Beispiel 3 (Suspension S3)

100 Teile Siliconharz H3 vermahlen zu einem Pulver mit einem mittleren Teilchendurchmesser von 35 µm, 0,7 Teile Netzmittel, 5 Teile unbehandelte hochdisperse Kieselsäure mit eine BET Oberfläche von 380 m²/g und 400 Teile Wasser werden 20 Minuten gerührt und anschließend 5 Teile der in Beispiel 1 beschriebenen 40%igen Kaliummethylsiliconatlösung zugegeben. Die Viskosität der Suspension bei einem Schergefälle 10/s betrug 500 mPas.

### Beispiel 4 (Suspension S4)

100 Teile Siliconharz H3 vermahlen zu einem Pulver mit einem mittleren Teilchendurchmesser von 32 µm, 1 Teil Netzmittel, 3 Teile des in Beispiel 1 beschriebenen Antiabsetzmittels und 400 Teile Wasser werden 20 Minuten gerührt und anschließend 2 Teile der in Beispiel 1 beschriebenen 40%igen Kaliummethylsiliconatlösung zugegeben. Die Viskosität der Suspension bei einem Schergefälle 10/s betrug 350 mPas.

### Beispiel 5

### Thermogravimetrie

Die in den Beispielen 1 bis 4 hergestellten Bindemittelsuspensionen S1-S4 wurden 5 Stunden im Vakuumtrockenschrank bei 40°C und 3 hPa getrocknet und für 3 Minuten auf 300°C und einem Druck von 1000 hPa erhitzt. Alle Bindemittelproben waren nach dieser Behandlung farblos. Diese Proben wurden mit Thermogravimetrie über einen Temperaturbereich bis 700°C weiter untersucht (Heizrate 10°C pro Minute). Die Ergebnisse sind in Tabelle 2 dargestellt:

**Tabelle 2:**

| Suspension | Masseverlust in % bei | | |
|---|---|---|---|
| | 250°C | 350°C | 600°C |
| S1 | 0,01 | 1,51 | 11,80 |
| S2 | 0,00 | 0,04 | 8,00 |
| S3 | 0,00 | 0,90 | 10,54 |
| S4 | 0,01 | 0,85 | 11,76 |

Überraschenderweise findet bis 350°C praktisch kein Abbau der Bindemittel statt, und auch bei 600°C ist lediglich ein erstaunlich moderater Gewichtsverlust des Bindemittels feststellbar.

### Beispiel 6

Mit dem Rotationsverfahren, wie z.B. in Ullmann's ecyclopedia of industrial chemistry 5^{th} ed. Vol A 11 S 23 ff. beschrieben, wird kontinuierlich 800 kg/h Glasfasern erzeugt. Diese werden unmittelbar nach der Zerfaserung über eine Ringdüse mit 200 kg/h der Bindemittelsuspension S4 besprüht. Die Trocknung, Formgebung und Aushärtung erfolgt auf einem Förderband bei einer Bandgeschwindigkeit von 12 m/min und einer Temperatur im Härteofen von 250-270°C.

Es wurden farblose Dämmstoffe mit einer Schichtdicke von 40 mm, einem Raumgewicht von 20 kg/m³, und mit einer Auflage von 5% ausgehärtetem Siliconharz, bezogen auf die Gesamtmasse des Dämmstoffs, erhalten. Die so erhaltenen Dämmstoffe zeichnen sich durch eine geringe Staubneigung und eine sehr gutes elastisches Verhalten (Rückstellvermögen) aus.

## Patentansprüche

1. Organopolysiloxansuspensionen bestehend aus
(A) 100 Gewichtsteilen eines pulverförmigen Organopolysiloxanharzes aus Einheiten der allgemeinen Formel
RₐSi(OR¹)_{b}(OH)_{c}O_{(4-a-b-c)/2} (I),
wobei
R gleich oder verschieden sein kann und einwertige, SiC-gebundene, gegebenenfalls substituierte Kohlenwasserstoffreste bedeutet,
R¹ gleich oder verschieden sein kann und einen Alkylrest bedeutet,
a 0, 1, 2 oder 3 ist,
b 0, 1, 2 oder 3 ist und
c 0, 1, 2 oder 3 ist,
mit der Maßgabe, dass die Summe aus a+b+c≤3 ist und das Organopolysiloxanharz aus Einheiten der allgemeinen Formel (I) mindestens einen Alkoxyrest und mindestens einen Hydroxyrest aufweist,
(B) 0,05 bis 5 Gewichtsteilen eines Kondensationskatalysators,
(C) 0 bis 4 Gewichtsteilen eines anorganischen Antiabsetzmittels,
(D) 0,01 bis 4 Gewichtsteilen eines Benetzungshilfsmittels,
(E) 100 bis 10000 Gewichtsteilen Wasser und
(F) 0 bis 10 Gewichtsteilen Zusatzstoffe, ausgewählt aus Haftvermittlern, Polyorganosiloxanen, ausgenommen solche aus Einheiten der Formel (I), Konservierungsmitteln, Farbstoffen und Duftstoffen.

2. Organopolysiloxansuspensionen gemäß Anspruch 1, **dadurch gekennzeichnet, dass** die Glasübergangstemperatur der Organopolysiloxanharze (A) im Bereich von 30 bis 120°C liegt.

3. Organopolysiloxansuspensionen gemäß Anspruch 1 oder 2, **dadurch gekennzeichnet, dass** als Katalysator (B) Siliconate und/oder Silanolate eingesetzt werden.

4. Organopolysiloxansuspensionen gemäß einem oder mehreren der Ansprüche 1 bis 3, **dadurch gekennzeichnet, dass** anorganisches Antiabsetzmittel (C) in Mengen von 0,5 bis 2 Gewichtsteilen je 100 Teile eingesetztes Siliconharz (A), eingesetzt wird.

5. Organopolysiloxansuspensionen gemäß einem oder mehreren der Ansprüche 1 bis 4, **dadurch gekennzeichnet, dass** es sich bei dem Benetzungshilfsmittel (D) um Polyether-Polysiloxane aus Einheiten der allgemeinen Formel
(R²O)_{d}SiGₑR⁶ _{f}O_{(4-d-e-f)/2} (III)
handelt, wobei
R⁶ gleich oder verschieden sein kann und eine für R angegebene Bedeutung hat,
R² gleich oder verschieden sein kann und eine für R¹ angegebene Bedeutung hat oder Wasserstoff ist,
G gleich oder verschieden sein kann und einen Rest der Formel
-(CH₂)ₓ(OC_{y}H_{2y})_{z}OR³ (IV)
bedeutet, wobei R³ ein Wasserstoffatom, Alkyl- oder Acylrest mit 1-4 Kohlenstoffatomen ist,
x eine Zahl von 2 bis 10 ist,
y 2, 3 oder 4 sein kann und
z einen Wert von 1 bis 100 hat,
d 0, 1, 2 oder 3, bevorzugt durchschnittlich 0 bis 0,5, ist,
e 0, 1, 2 oder 3, bevorzugt durchschnittlich 0,05 bis 0,5, ist und
f 0, 1, 2 oder 3, bevorzugt durchschnittlich 1,5 bis 2,0, ist,
mit der Maßgabe, dass die Summe d+e+f kleiner oder gleich 3 ist und das Siloxan aus Einheiten der Formel (III) mindestens einen Rest G aufweist.

6. Verfahren zur Herstellung von Formteilen auf der Basis von anorganischen Fasern durch Zufügen von Bindemittel zum Fasergut, Verformung des Faserguts und Härtung, **dadurch gekennzeichnet, dass** als Bindemittel die Organopolysiloxansuspensionen gemäß einem oder mehreren der Ansprüche 1 bis 5 gegebenenfalls im Gemisch mit weiteren Komponenten eingesetzt werden.

7. Verfahren nach Anspruch 6, **dadurch gekennzeichnet, dass** die Organopolysiloxansuspension auf die den Schmelzofen verlassenden, noch heißen Mineralfasern kontinuierlich aufgesprüht, das so behandelte Fasergut getrocknet, auf die gewünschte Dichte gebracht und das Siliconharz durch Erwärmen aushärten gelassen wird.

8. Formteile hergestellt aus Mineralfasern und Bindemitteln, **dadurch gekennzeichnet, dass** als Bindemittel Organopolysiloxansuspensionen gemäß einem oder mehreren der Ansprüche 1 bis 5 eingesetzt werden.

## Claims

1. Organopolysiloxane suspension composed of
(A) 100 parts by weight of a pulverulent organopolysiloxane resin composed of units of the general formula
RₐSi(OR¹)_{b}(OH)_{c}O_{(4-a-b-c)/2} (I),
where
R may be identical or different and is monovalent, SiC-bonded, where appropriate substituted, hydrocarbon radicals,
R¹ may be identical or different, and is an alkyl radical,
a is 0, 1, 2, or 3,
b is 0, 1, 2, or 3, and
c is 0, 1, 2 or 3,
with the proviso that the sum a+b+c is ≤ 3, and that the organopolysiloxane resin composed of units of the general formula (I) has at least one alkoxy radical and at least one hydroxy radical,
(B) from 0.05 to 5 parts by weight of a condensation catalyst,
(C) from 0 to 4 parts by weight of an inorganic anti-settling agent,
(D) from 0.01 to 4 parts by weight of a wetting agent,
(E) from 100 to 10 000 parts by weight of water, and
(F) from 0 to 10 parts by weight of additives, selected from adhesion promoters, polyorganosiloxanes, other than those composed of units of the formula (I), preservatives, dyes, and fragrances.

2. Organopolysiloxane suspension according to Claim 1, **characterized in that** the glass transition temperature of the organopolysiloxane resins (A) is in the range from 30 to 120°C.

3. Organopolysiloxane suspension according to Claim 1 or 2, **characterized in that** the catalyst (B) used comprises siliconates and/or silanolates.

4. Organopolysiloxane suspension according to one or more of Claims 1 to 3, **characterized in that** the amounts used of inorganic anti-settling agent (C) are from 0.5 to 2 parts by weight per 100 parts of silicone resin (A) used.

5. Organopolysiloxane suspension according to one or more of Claims 1 to 4, **characterized in that** the wetting agent (D) is polyether polysiloxanes composed of units of the general formula
(R²O)_{d}SiGₑR⁶ _{f}O_{(4-d-e-f)/2} (III)
where
R⁶ may be identical or different and is as defined for R,
R² may be identical or different and is as defined for R¹, or is hydrogen,
G may be identical or different and is a radical of the formula
-(CH₂)ₓ(OC_{y}H_{2y})_{z}OR³ (IV)
where R³ is a hydrogen atom, or an alkyl or acyl radical having from 1 to 4 carbon atoms,
x is a number from 2 to 10,
y may be 2, 3, or 4, and
z is from 1 to 100,
d is 0, 1, 2, or 3, its average preferably being from 0 to 0.5,
e is 0, 1, 2, or 3, its average preferably being from 0.05 to 0.5, and
f is 0, 1, 2, or 3, its average preferably being from 1.5 to 2.0,
with the proviso that the sum d+e+f is smaller than or equal to 3, and that the siloxane composed of units of the formula (III) has at least one radical G.

6. Process for producing mouldings based on inorganic fibres, by adding binder to the fibre product, shaping the fibre product, and curing, **characterized in that**, as binder, the organopolysiloxane suspensions according to one or more of Claims 1 to 5, are used, where appropriate in a mixture with other components.

7. Process according to Claim 6, **characterized in that** the organopolysiloxane suspension is sprayed continuously onto the mineral fibres which are still hot as they leave the furnace, the resultant treated fibre product is dried and brought to the desired density, and the silicone resin is cured by heating.

8. Mouldings produced from mineral fibres and from binders, **characterized in that** the binders used comprise organopolysiloxane suspensions according to one or more of Claims 1 to 5.

## Revendications

1. Suspensions d'organopolysiloxane constituées par
(A) 100 parties en poids d'une résine d'organopolysiloxane sous forme de poudre, constituée d'unités de formule générale
RₐSi(OR¹)_{b}(OH)_{c}O_{(4-a-b-c)/2} (I),
où
R peut être identique ou différent et signifie des radicaux hydrocarbonés monovalents, liés par SiC, le cas échéant substitués,
R¹ peut être identique ou différent et signifie un radical alkyle,
a représente 0, 1, 2 ou 3,
b représente 0, 1, 2 ou 3 et
c représente 0, 1, 2 ou 3,
à condition que la somme de a+b+c ≤ 3 et que la résine d'organopolysiloxane constituée par des unités de formule générale (I) présente au moins un radical alcoxy et au moins un radical hydroxy,
(B) 0,05 à 5 parties en poids d'un catalyseur de condensation,
(C) 0 à 4 parties en poids d'un agent d'anti-sédimentation inorganique,
(D) 0,01 à 4 parties en poids d'un adjuvant de mouillage,
(E) 100 à 10 000 parties en poids d'eau et
(F) 0 à 10 parties en poids d'additifs, choisis parmi les promoteurs d'adhérence, les polyorganosiloxanes, à l'exception de ceux constitués par des unités de formule (I), les conservateurs, les colorants et les parfums.

2. Suspensions d'organopolysiloxane selon la revendication 1, **caractérisées en ce que** la température de transition vitreuse de la résine d'organopolysiloxane (A) est située dans la plage de 30 à 120°C.

3. Suspensions d'organopolysiloxane selon la revendication 1 ou 2, **caractérisées en ce qu'**on utilise comme catalyseur (B) des siliconates et/ou des silanolates.

4. Suspensions d'organopolysiloxane selon l'une ou plusieurs des revendications 1 à 3, **caractérisées en ce que** l'agent d'anti-sédimentation inorganique (C) est utilisé en des quantités de 0,5 à 2 parties en poids par 100 parties en poids de résine de silicone (A) utilisée.

5. Suspensions d'organopolysiloxane selon l'une ou plusieurs des revendications 1 à 4, **caractérisées en ce qu'**il s'agit, pour l'adjuvant de mouillage (D), de polyéther-polysiloxanes constitués d'unités de formule générale
(R²O)_{d}SiGₑR⁶ _{f}O_{(4-d-e-f)/2} (III)
où
R⁶ peut être identique ou différent et présente une signification indiquée pour R,
R² peut être identique ou différent et présente une signification indiquée pour R¹ ou représente hydrogène,
G peut être identique ou différent et signifie un radical de formule
-(CH₂)ₓ(OC_{y}H_{2y})_{z}OR³ (IV)
où R³ représente un atome d'hydrogène, un radical alkyle ou acyle comprenant 1 à 4 atomes de carbone,
x représente un nombre de 2 à 10,
y représente 2, 3 ou 4 et
z vaut 1 à 100,
d représente 0, 1, 2 ou 3, de préférence en moyenne 0 à 0,5,
e représente 0, 1, 2 ou 3, de préférence en moyenne 0,05 à 0,5, et
f représente 0, 1, 2 ou 3, de préférence en moyenne 1,5 à 2,0, à condition que la somme d+e+f soit plus petite ou égale à 3 et que le siloxane constitué par des unités de formule (III) présente au moins un radical G.

6. Procédé pour la préparation de pièces façonnées à base de fibres inorganiques par addition d'un liant au produit fibreux, façonnage du produit fibreux et durcissement, **caractérisé en ce qu'**on utilise comme liant les suspensions d'organopolysiloxane selon l'une ou plusieurs des revendications 1 à 5, le cas échéant en mélange avec d'autres composants.

7. Procédé selon la revendication 6, **caractérisé en ce que** la suspension d'organopolysiloxane est pulvérisée en continu sur les fibres minérales encore chaudes quittant le four de fusion, le produit fibreux ainsi traité est séché, amené à la densité souhaitée et on laisse durcir la résine de silicone par chauffage.

8. Pièces façonnées préparées à partir de fibres minérales et de liants, **caractérisées en ce qu'**on utilise comme liant des suspensions d'organopolysiloxane selon l'une ou plusieurs des revendications 1 à 5.
